# DEMANDE DE BREVET EUROPEEN

(11) **EP 1 962 205 A1**
(43) Date de publication de la demande: **27.08.2008**
(21) Numéro de dépôt: 07300814.6
(22) Date de dépôt: 22.02.2007
(51) Int. Cl.: G06F 17/30

(54) **Procédé de manipulation d'une colonne de vecteur de données multi-valuées**

(71) Demandeur: Isthma, 75020 Paris (FR)
(72) Inventeur: Barrault, Mathieu, 75019 Paris (FR); Vautrain, Frédérick, 75019 Paris (FR)
(74) Mandataire: Laget, Jean-Loup

(57) **Abrégé**

Procédé de traitement de données au moyen d'un ordinateur ayant accès à des données sous la forme d'une première table de données multi-valuées comprenant une pluralité d'individus (2) et au moins une pluralité de champs multi-valués (3), caractérisé par le fait qu'il comprend les étapes consistant à :
- mettre à disposition de l'utilisateur une interface (6) permettant de sélectionner au moins deux champs à vectoriser dans ladite pluralité de champs multi-valués,
- générer une deuxième table de données multi-valuées (7) comprenant une pluralité d'individus correspondant à ladite pluralité d'individus de la première table de données multi-valuées, et au moins un champ vectorisé dont les cellules (Cᵢⱼ) comprennent, pour chaque individu, les données multi-valuées contenues dans les cellules desdits champs à vectoriser sélectionnés.

## Description

La présente invention est relative aux données multi-valuées. Plus particulièrement, l'invention est relative à un procédé, mis en oeuvre par un logiciel, permettant la manipulation et la visualisation de données multi-valuées, ou plus généralement toute opération permettant de préparer des données multi-valuées en vue d'une analyse multi-valuée.

Dans le but de fixer le sens des termes utilisés dans ce document, le lexique donné dans la demande PCT W02006013307 est rappelé :
- Table de données : dans ce qui suit, une table de données est une représentation matricielle constituée de cellules aptes à contenir de l'information. Les cellules sont organisées en lignes et en colonnes. Chaque colonne est un attribut ou champ (Identifiant, Age, Sexe, Ville, etc.), et chaque ligne représente un individu ou unité statistique. Un individu est identifié de manière non équivoque par la valeur d'un identifiant qui peut éventuellement être un n-uplet. Cet identifiant peut être repris dans la table de données par un champ d'identification ou par plusieurs champs s'il s'agit d'un n-uplet.
- Donnée monovaluée ou classique : il s'agit d'une information ayant une seule valeur. Un entier (3), un réel (1,312), un caractère (A) ou l'équivalent, sont des exemples de données classiques ou monovaluées. De manière connue, une donnée monovaluée est consignée dans une cellule d'une table de données. Lorsqu'un champ est une variable prenant des valeurs monovaluées, on parlera de champ classique. De même, une table comportant uniquement des champs classiques sera dite table de données classiques.
- Donnée multi-valuée ou complexe : il s'agit d'une donnée comme, par exemple, un ensemble de valeurs, un intervalle, une distribution, une courbe ou l'équivalent. Une donnée multi-valuée est également consignée dans une unique cellule d'une table. Par exemple, un intervalle est une donnée multi-valuée mémorisée dans une cellule. Cette cellule contient l'équivalent de quatre valeurs à savoir la valeur de la borne inférieure de l'intervalle, la valeur de la borne supérieure, une information permettant de savoir si la borne inférieure est contenue ou exclue de l'intervalle et une information permettant de savoir si la borne supérieure est contenue ou exclue de l'intervalle. Les données multi-valuées sont par exemple codées dans une cellule par une chaîne de caractères. Lorsqu'un champ est une variable prenant des valeurs multi-valuées, on parlera de champ multi-valué. Une table comportant au moins un champ multi-valué sera dite table de données multi-valuées.
- Agrégation : il s'agit d'une opération de regroupement des valeurs monovaluées de différentes cellules de manière à construire une grandeur elle-même monovaluée. Par exemple, effectuer le calcul d'une moyenne ou d'une variance sur les valeurs d'un champ d'un lot d'individus est une opération d'agrégation.
- Synthèse : il s'agit d'une opération de regroupement des valeurs monovaluées d'un lot de cellules pour construire une valeur multi-valuée. Par exemple, réunir les valeurs monovaluées dudit lot dans une donnée multi-valuée du type intervalle contenant l'ensemble de ces valeurs.

Des travaux théoriques récents ont montré les multiples avantages qui pouvaient être tirés de l'utilisation de valeurs multi-valuées en analyse de données, et, plus particulièrement, pour le traitement des bases de données volumineuses comportant un grand nombre de données monovaluées regroupées dans un grand nombre de tables. Ces avantages sont d'autant plus importants que les bases analysées sont hétérogènes au sens où les données qu'elles comportent proviennent de sources différentes et/ou possèdent des formats différents.

D'une manière simplifiée, les données multi-valuées permettent de résumer de grandes quantités de données monovaluées tout en conservant un niveau d'information plus élevé que les données monovaluées obtenue par simple agrégation. Les données multi-valuées se caractérisent par une description plus riche des données initiales que les données monovaluées agrégées. En conséquence, les données multi-valuées autorisent des analyses plus fines. Mais ces analyses sont d'un type foncièrement nouveau du fait, entre autres, de la variété des opérateurs multi-valués utilisables. Pour ce faire, de nouveaux algorithmes spécifiques à l'analyse de données multi-valuées ont été développés.

La demande PCT W02006013307 précitée décrit un procédé qui permet de produire une table de données multi-valuées à partir du contenu de fichiers texte ou de bases de données relationnelles contenant des données classiques monovaluées hétérogènes, afin de permettre des analyses fines utilisant des algorithmes de traitement de données multi-valuées. Ce document se limite à la production de la table de données multi-valuées et ne donne pas d'indication sur la manipulation et le traitement des données multi-valuées.

Il y a donc un besoin pour des outils logiciels plus élaborés afin de manipuler des tables de données multi-valuées. Puisque l'opération de manipulation de données multi-valuées en vue d'une analyse multi-valuée fait intervenir l'utilisateur, il est nécessaire de fournir à ce dernier des interfaces permettant de « manipuler » facilement les données multi-valuées.

L'invention a donc pour but de résoudre les problèmes mentionnés précédemment.

Pour cela, l'invention fournit un procédé de traitement de données au moyen d'un ordinateur ayant accès à des données sous la forme d'une première table de données multi-valuées comprenant une pluralité d'individus et au moins une pluralité de champs multi-valués, caractérisé par le fait qu'il comprend les étapes consistant à :
- mettre à disposition de l'utilisateur une interface permettant de sélectionner au moins deux champs à vectoriser dans ladite pluralité de champs multi-valués,
- générer une deuxième table de données multi-valuées comprenant une pluralité d'individus correspondant à ladite pluralité d'individus de la première table de données multi-valuées, et au moins un champ vectorisé dont les cellules comprennent, pour chaque individu, les données multi-valuées contenues dans les cellules desdits champs à vectoriser sélectionnés.

Autrement dit, la présente invention propose une nouvelle opération de manipulation de données, appelée vectorisation. Il s'agit d'une opération de regroupement de données multi-valuées provenant de différentes cellules pour construire une donnée multi-valuée vectorisée, c'est-à-dire une donnée multi-valuée qui regroupe les données multi-valuées d'origine sans perte d'information. Le procédé de l'invention permet de créer facilement une deuxième table de données multi-valuées car l'opération de vectorisation se fait pour des champs sélectionnés et non cellule par cellule. La deuxième table de données multi-valuées obtenue avec le procédé selon l'invention est une structure de données qui présente plusieurs avantages, notamment :
- Il est possible de réaliser différentes opérations habituelles (ajout d'individu, modification de l'ordre, ajout ou suppression de champs,...) tout en conservant le champ vectorisé,
- Le champ vectorisé peut être affiché selon un rendu particulier qui permet de distinguer ce champ des autres champs, de distinguer entre elles les données multi-valuées contenues dans ce champ,...
- Le rendu particulier précité peut être facilement modifié,
- Il est possible d'accéder aux données contenues dans les cellules du champ vectorisés.

Certains de ces avantages sont visés dans des modes de réalisations particuliers indiqués ci-dessous.

De préférence, ladite deuxième table de données multi-valuées est générée en ajoutant ledit champ vectorisé à ladite première table de données multi-valuées. Avantageusement, adite deuxième table de données multi-valuées est générée en supprimant lesdits au moins deux champs à vectoriser sélectionnés de ladite première table de données multi-valuées.

Selon un mode de réalisation particulier, le procédé comprend les étapes consistant à :
- mettre à disposition de l'utilisateur une interface permettant de sélectionner au moins un champ à vectoriser supplémentaire parmi les champs de ladite pluralité de champs multi-valués qui n'ont pas été sélectionné précédemment en tant que champs à vectoriser,
- modifier ladite deuxième table de données multi-valuées en ajoutant, pour chaque individu, les données de la cellule du champ à vectoriser supplémentaire à la cellule dudit champ vectorisé.

Selon un mode de réalisation particulier, le procédé comprend les étapes consistant à :
- mettre à disposition de l'utilisateur une interface permettant de sélectionner au moins un champ à supprimer dans les champs de ladite pluralité de champs multi-valués qui ont été sélectionné précédemment en tant que champs à vectoriser,
- modifier ladite deuxième table de données multi-valuées en supprimant dudit champ vectorisé, pour chaque individu, les données provenant dudit champs à supprimer sélectionné. Cette étape est toutefois facultative.

Selon un mode de réalisation particulier, le procédé comprend les étapes consistant à :
- mettre à disposition de l'utilisateur une interface permettant de sélectionner des paramètres d'affichage dudit champ vectorisé,
- générer un affichage de ladite deuxième table de données multi-valuées en fonction desdits paramètres d'affichage.

Selon un mode de réalisation particulier, le procédé comprend les étapes consistant à :
- mettre à disposition de l'utilisateur une interface permettant de sélectionner une cellule dudit champ vectorisé,
- générer un affichage de la cellule sélectionnée comprenant au moins l'affichage des données provenant d'un desdits champs à vectoriser.

Selon un mode de réalisation particulier, le procédé comprend les étapes consistant à :
- mettre à disposition de l'utilisateur une interface permettant de sélectionner une opération à effectuer sur ledit champ vectorisé,
- générer une troisième table de données multi-valuées comprenant une pluralité d'individus correspondant à ladite pluralité d'individus de la deuxième table de données multi-valuées, et au moins un champ de résultat dont les cellules comprennent, pour chaque individu, le résultat de l'opération sélectionnée sur les données multi-valuées contenues dans les cellules du champ vectorisé.

L'invention fournit également un logiciel de traitement de données comprenant une suite d'instructions qui, quand elles sont exécutées par un ordinateur hôte, provoque l'exécution du procédé selon l'invention ci-dessus.

L'invention sera mieux comprise grâce à la description qui va suivre donnée à titre d'exemple non limitatif en référence aux dessins annexés dans lesquels :
- la figure 1 représente une fenêtre de visualisation d'une première table de données multi-valuées,
- la figure 2 représente la fenêtre de la figure 1 et un menu déroulant,
- la figure 3 représente une fenêtre permettant à un utilisateur de déterminer les paramètres d'une opération de vectorisation,
- la figure 4 représente une fenêtre de visualisation d'une deuxième table de données multi-valuées,
- la figure 5 représente une fenêtre de visualisation du contenu d'une cellule de la table de la figure 4,
- la figure 6 représente la fenêtre de la figure 4 et un menu contextuel,
- la figure 7 représente une fenêtre de visualisation d'une troisième table de données multi-valuées,
- la figure 8 représente une fenêtre de visualisation du contenu d'une cellule de la colonne "Groupe 1" de la table de la figure 7.

Le procédé selon l'invention est de préférence mis en oeuvre sous la forme d'un logiciel de traitement de données. Le logiciel comporte une suite d'instructions exécutables par un ordinateur hôte. L'ordinateur hôte comporte une mémoire apte à stocker les instructions du logiciel et un processeur apte à exécuter les instructions du logiciel. L'ordinateur hôte comporte un système d'exploitation pour lequel le logiciel selon l'invention apparaît comme une application. L'ordinateur hôte gère différents périphériques tels qu'un écran, une souris, etc., permettant à l'utilisateur d'interagir avec le logiciel au travers d'une interface homme/machine. En variante, l'architecture informatique peut être distribuée, au sens où un utilisateur disposant d'un ordinateur distant connecté à l'ordinateur hôte au moyen d'un réseau, par exemple supportant le protocole TCP/IP, peut interagir avec le logiciel.

Lorsque l'utilisateur lance l'exécution du logiciel de traitement de données selon l'invention, une interface homme/machine, d'un type par ailleurs connu, constituée de fenêtres, de cadres et de menus déroulants apparaît à l'écran. Les menus déroulants présentent différents choix de fonctions. Lorsque l'utilisateur sélectionne une fonction, le module correspondant du logiciel est exécuté effectuant une opération associée.

En raison notamment du grand nombre de données qu'on peut être amené à traiter avec le procédé selon l'invention, il est souhaitable que le logiciel soit exécuté sur un ordinateur récent, disposant notamment d'une mémoire de grande capacité.

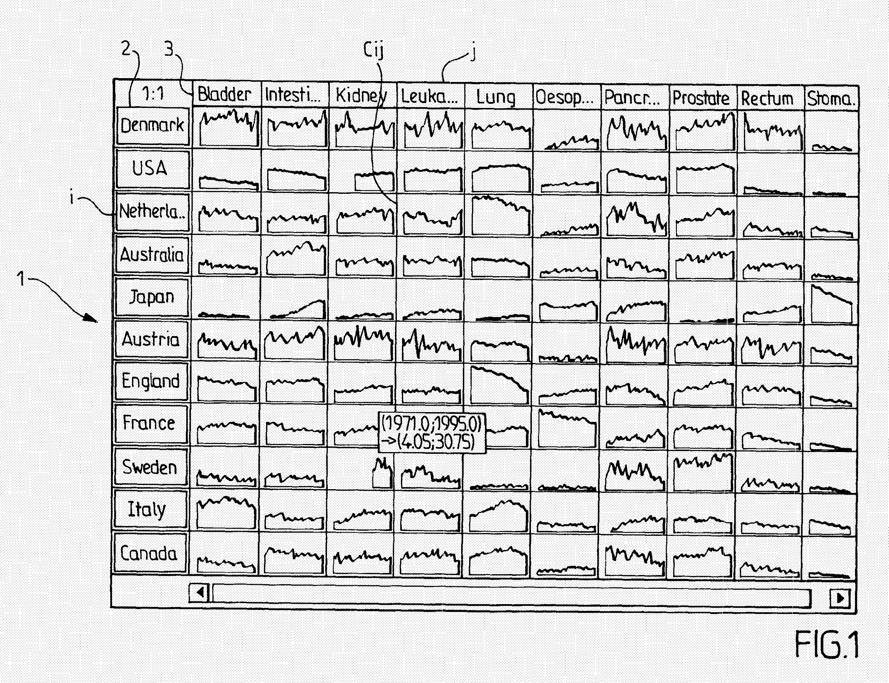

Les figures 1 à 8 représentent des cadres et fenêtres affichés à l'écran lors de l'exécution d'un logiciel de traitement de données multi-valuées, qui met en oeuvre le procédé selon un mode de réalisation de l'invention. Bien entendu, d'autres éléments non représentés sur ces figures peuvent également être affichés à l'écran, tels que des menus, des autres cadres ou fenêtres. Les différentes étapes du procédé seront décrites en référence à ces figures.

La table de données multi-valuées 1 représentée sur la figure 1 comprend une pluralité des cellules réparties en lignes et en colonnes. Les lignes de la table 1 sont associées à une pluralité d'individus 2 correspondant à des pays (Danemark, USA, ...). Les colonnes de la table 1 sont associées à une pluralité de champs 3 correspondant à des organes : vessie ("Bladder"), intestin ("Intestine"),.... Chaque cellule Cᵢⱼ de la table 1 contient une donnée multi-valuée correspondant à la valeur du champ de la colonne j, pour l'individu i. Dans l'exemple représenté, la donnée multi-valuée de chaque cellule Cᵢⱼ est une courbe.

La table de données multi-valuées 1 peut par exemple être obtenue en exécutant un module du logiciel qui permet de générer un tableau croisé de la manière indiquée dans la demande PCT précitée. Bien entendu, la table 1 de la figure 1 est un exemple et le procédé selon l'invention peut s'appliquer à d'autres types de données multi-valuées.

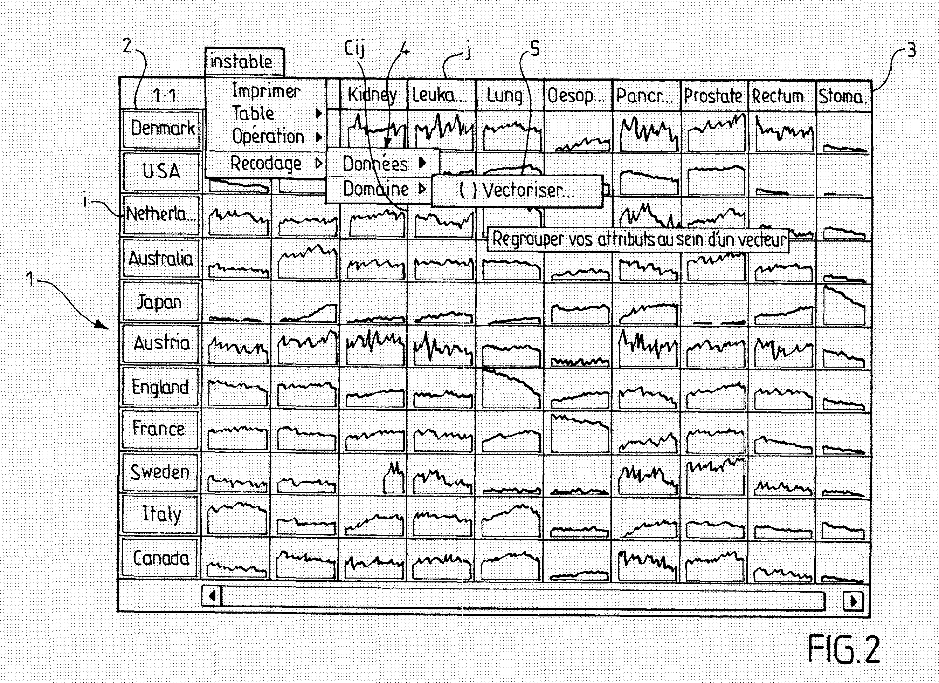

Sur la figure 2, l'utilisateur a fait apparaître un menu déroulant 4 qui permet de déclencher l'exécution de différents modules particuliers du logiciel, notamment un module « Vectoriser » 5.

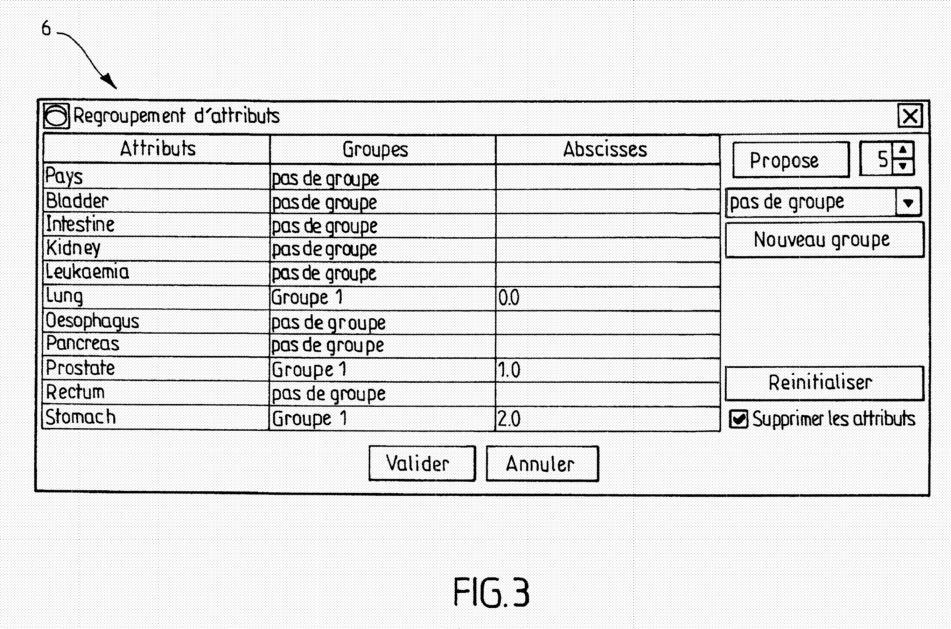

La sélection de ce module vectoriser 5 fait apparaître la fenêtre 6 représentée sur la figure 3. La fenêtre 6 propose une interface utilisateur qui permet de sélectionner des champs à vectoriser en vue de la création d'un champ vectorisé, en leur associant un groupe et une abscisse dans ce groupe. Dans l'exemple représenté, les champs « Lung », « Prostate » et « Stomach » sont sélectionnés et associés au groupe « Groupe 1 » et aux abscisses 0.0, 1.0 et 2.0 respectivement. Bien entendu, plusieurs champs vectorisés pourraient être créés en associant d'autres champs à un autre groupe. Le paramètre « abscisse » permet de spécifier comment devront être affichées les données du champ vectorisé.

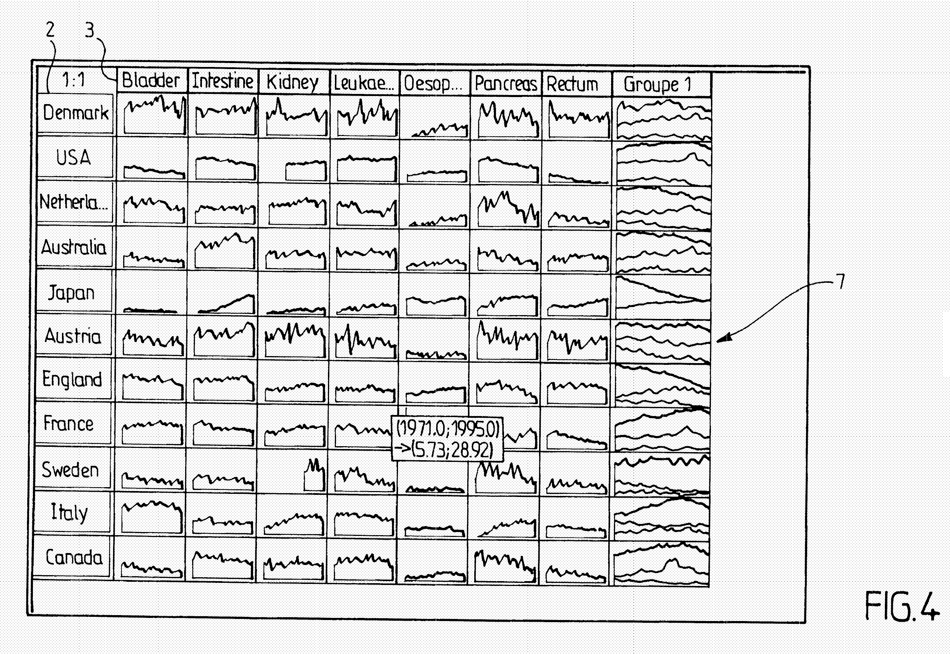

Quand l'utilisateur sélectionne le bouton « Valider » de la figure 3, la fenêtre 6 est fermée et le logiciel génère la table de données multi-valuées 7 de la figure 4. La table 7 correspond à la table 1 de laquelle on a retiré les champs sélectionnés à l'étape de la figure 3, et à laquelle on a ajouté un champ supplémentaire « Groupe 1 ». Le champ « Groupe 1 » est un champ vectorisé, c'est-à-dire que chacune de ses cellules Cᵢⱼ contient une donnée multi-valuée vectorisée. Plus précisément, dans l'exemple donné chaque cellule Cᵢⱼ de la colonne « Groupe 1 » comprend trois courbes.

Le paramètre « abscisse » précité fait partie, avec d'autres paramètres tels que « couleur », « remplir »,... d'un ensemble de paramètres de rendu associés au champ vectorisé. Sur la figure 4, les données des cellules Cᵢⱼ du champ « Groupe 1 » sont affichées en tenant compte des paramètres de rendu : les courbes sont affichées les unes au-dessus des autres dans l'ordre spécifié par le paramètre abscisse, dans la couleur spécifiée, et la surface entre deux courbes est remplie. D'autres paramètres de rendu pourraient être également spécifiés. Les paramètres de rendu peuvent dépendre du type de données multi-valuées.

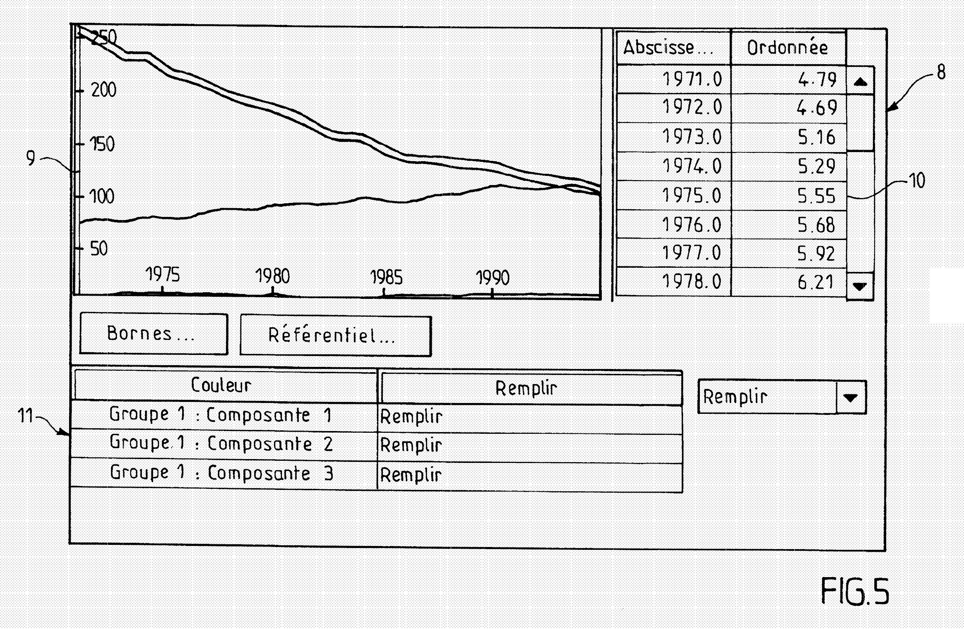

La figure 5 représente une fenêtre 8 que l'utilisateur peut faire apparaître, par exemple par un double clic sur une des cellules Cᵢⱼ de la colonne « Groupe 1 ». La fenêtre 8 comprend un premier cadre 9 reproduisant de manière agrandie et plus détaillée que sur la figure 4 l'affichage de la cellule Cᵢⱼ, et un deuxième cadre 10 dans lequel une des courbes de la cellule Cᵢⱼ, par exemple sélectionnée par un clic dans une zone correspondante du cadre 9, est affichée sous forme de table numérique. La fenêtre 8 comprend également une interface utilisateur 11 permettant de modifier les paramètres de rendu « Couleur » et « Remplir ». Bien entendu l'interface utilisateur 11 pourrait permettre de modifier d'autres paramètres.

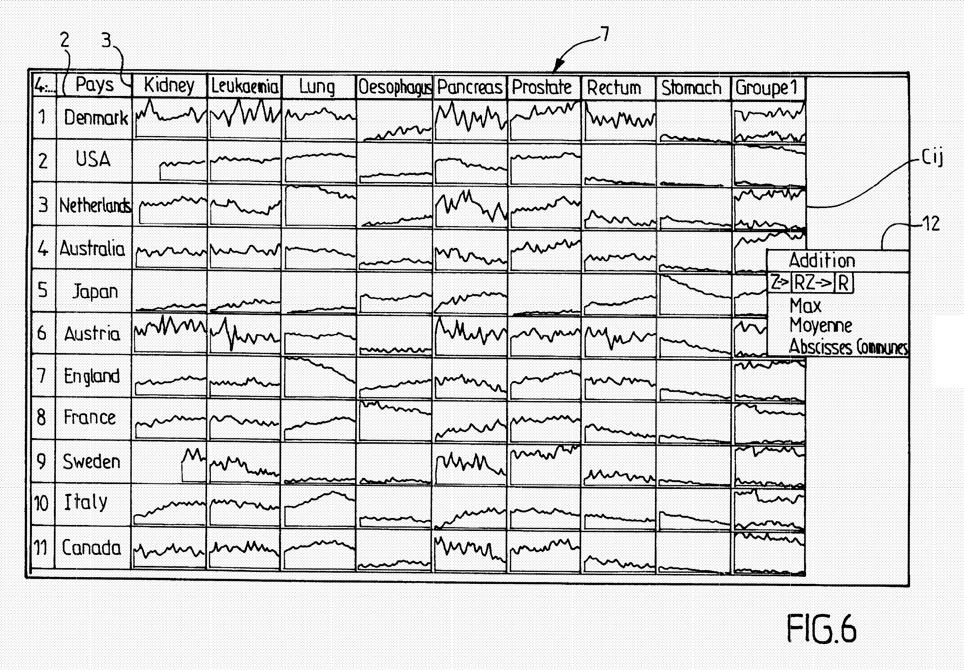

Le logiciel permet d'effectuer de nombreuses opérations sur la table de données multi-valuées 7. On peut notamment modifier l'ordre des individus ou des champs, ajouter des individus ou des champs,... Par exemple, la figure 6 représente la table 7 de la figure 5, où on a ajouté les champs « Lung », « Prostate » et « Stomach » et supprimé les champs « Bladder » et « Intestine ». On peut également ajouter ou supprimer des données dans le champ vectorisé.

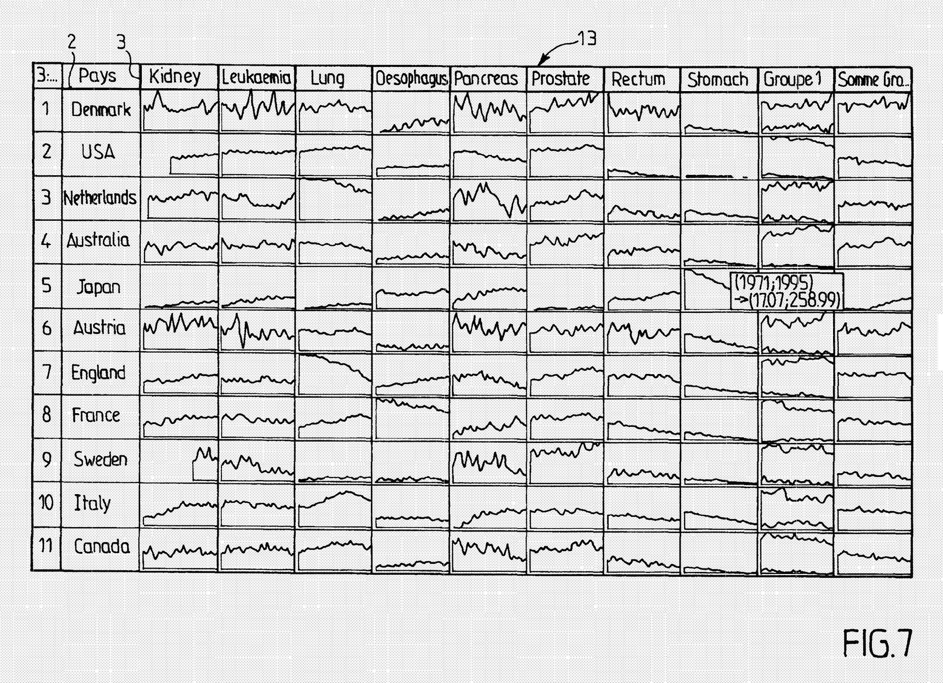

La figure 6 montre également un menu contextuel 12 que l'utilisateur peut faire apparaître, par exemple par un clic droit sur la colonne « Groupe 1 ». Le menu contextuel 12 propose différentes opérations : Addition, Max, Moyenne, Abscisses communes. Quand l'utilisateur sélectionne une de ces opérations, le logiciel génère une troisième table de données multi-valuées 13, représentée sur la figure 7, qui correspond à la table 7 à laquelle on a ajouté un champ contenant le résultat de l'opération.

Dans l'exemple représenté, l'opération sélectionnée est l'addition, et les cellules du champ « Somme Groupe 1 » contiennent chacune une courbe correspondant à la somme des trois courbes du champ « Groupe 1 ». De nombreuses opérations sont envisageables, et peuvent dépendre du type de données multi-valuées. Dans le cas de courbes, il peut s'agir par exemple de : Somme de N courbes, Moyenne de N courbes, Multiplication de N courbes, Maximum de N courbes, Soustraction de deux courbes, division de deux courbes, Ordonnée de courbe 1 supérieure à courbe 2, Abscisses telles que courbe 1 est supérieure à courbe 2.

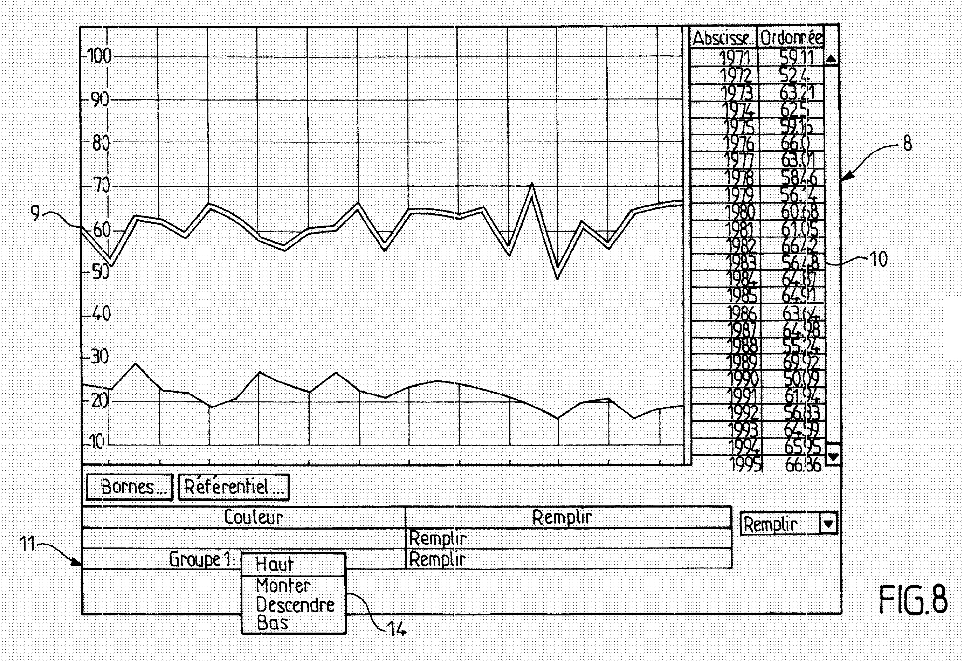

Dans le cas d'une opération non commutative (soustraction, division,...), l'opération est réalisée suivant l'ordre des courbes indiqué par le paramètre abscisse précité. Ce paramètre peut être modifié si l'ordre doit être changé. A cet effet, la figure 8 représente la fenêtre 8 de la figure 5 (avec d'autres données affichées) dans laquelle l'utilisateur a fait apparaître un menu contextuel 14 qui permet de modifier l'abscisse associée à une courbe sélectionnée.

Bien entendu, il est également possible d'effectuer ces opérations à partir d'un champ vectorisé obtenu différemment de ce qui est décrit ci-dessus.

Bien que l'invention ait été décrite en liaison avec un mode de réalisation particulier, il est bien évident qu'elle n'est nullement limitée à celui-ci et qu'elle comprend tous les équivalents techniques des moyens décrits ainsi que leurs combinaisons si celles-ci entrent dans le cadre de l'invention.

Par exemple, le procédé concerne également la vectorisation d'autres types de données multi-valuées. Les tables de données multi-valuées pourraient comprendre des champs de différents types, multi-valué ou classique.

## Revendications

1. Procédé de traitement de données au moyen d'un ordinateur ayant accès à des données sous la forme d'une première table de données multi-valuées (1) comprenant une pluralité d'individus (2) et au moins une pluralité de champs multi-valués (3), **caractérisé par le fait qu'**il comprend les étapes consistant à :
- mettre à disposition de l'utilisateur une interface (6) permettant de sélectionner au moins deux champs à vectoriser dans ladite pluralité de champs multi-valués,
- générer une deuxième table de données multi-valuées (7) comprenant une pluralité d'individus correspondant à ladite pluralité d'individus de la première table de données multi-valuées, et au moins un champ vectorisé dont les cellules (Cᵢⱼ) comprennent, pour chaque individu, les données multi-valuées contenues dans les cellules desdits champs à vectoriser sélectionnés.

2. Procédé selon la revendication 1, dans lequel ladite deuxième table de données multi-valuées est générée en ajoutant ledit champ vectorisé à ladite première table de données multi-valuées.

3. Procédé selon la revendication 2, dans lequel ladite deuxième table de données multi-valuées est générée en supprimant lesdits au moins deux champs à vectoriser sélectionnés de ladite première table de données multi-valuées.

4. Procédé selon l'une des revendications 1 à 3, comprenant les étapes consistant à :
- mettre à disposition de l'utilisateur une interface permettant de sélectionner au moins un champ à vectoriser supplémentaire parmi les champs de ladite pluralité de champs multi-valués qui n'ont pas été sélectionné précédemment en tant que champs à vectoriser,
- modifier ladite deuxième table de données multi-valuées en ajoutant, pour chaque individu, les données de la cellule du champ à vectoriser supplémentaire à la cellule dudit champ vectorisé.

5. Procédé selon l'une des revendications 1 à 4, comprenant les étapes consistant à :
- mettre à disposition de l'utilisateur une interface permettant de sélectionner au moins un champ à supprimer dans les champs de ladite pluralité de champs multi-valués qui ont été sélectionné précédemment en tant que champs à vectoriser,
- modifier ladite deuxième table de données multi-valuées en supprimant dudit champ vectorisé, pour chaque individu, les données provenant dudit champs à supprimer sélectionné.

6. Procédé selon l'une des revendications 1 à 5, comprenant les étapes consistant à :
- mettre à disposition de l'utilisateur une interface (11) permettant de sélectionner des paramètres d'affichage dudit champ vectorisé,
- générer un affichage de ladite deuxième table de données multi-valuées en fonction desdits paramètres d'affichage.

7. Procédé selon l'une des revendications 1 à 6, comprenant les étapes consistant à :
- mettre à disposition de l'utilisateur une interface permettant de sélectionner une cellule dudit champ vectorisé,
- générer un affichage de la cellule sélectionnée (9, 10) comprenant au moins l'affichage des données provenant d'un desdits champs à vectoriser.

8. Procédé selon l'une des revendications 1 à 7, comprenant les étapes consistant à :
- mettre à disposition de l'utilisateur une interface (12) permettant de sélectionner une opération à effectuer sur ledit champ vectorisé,
- générer une troisième table de données multi-valuées (13) comprenant une pluralité d'individus correspondant à ladite pluralité d'individus de la deuxième table de données multi-valuées, et au moins un champ de résultat dont les cellules comprennent, pour chaque individu, le résultat de l'opération sélectionnée sur les données multi-valuées contenues dans les cellules du champ vectorisé.

9. Logiciel de traitement de données comprenant une suite d'instructions qui, quand elles sont exécutées par un ordinateur hôte, provoque l'exécution d'un procédé selon l'une des revendications 1 à 8.

## Revendications modifiées

### Revendications modifiées conformément à la règle 137(2) CBE.

**1.** Procédé de traitement de données au moyen d'un ordinateur ayant accès à des données sous la forme d'une première table de données multi-valuées (1) comprenant une pluralité d'individus (2) et au moins une pluralité de champs multi-valués (3), comprenant l'étape consistant à :
- mettre à disposition de l'utilisateur une interface (6) permettant de sélectionner au moins deux champs dans ladite pluralité de champs multi-valués, **caractérisé par le fait qu'**il comprend l'étape consistant à :
- générer une deuxième table de données multi-valuées (7) comprenant une pluralité d'individus correspondant à ladite pluralité d'individus de la première table de données multi-valuées, et au moins un champ vectorisé, c'est-à-dire un champ dont les cellules (Cᵢⱼ) regroupent pour chaque individu, les données multi-valuées contenues dans les cellules desdits champs sélectionnés, sans perte d'information.

**2.** Procédé selon la revendication 1, dans lequel ladite deuxième table de données multi-valuées est générée en ajoutant ledit champ vectorisé à ladite première table de données multi-valuées.

**3.** Procédé selon la revendication 2, dans lequel ladite deuxième table de données multi-valuées est générée en supprimant lesdits au moins deux champs sélectionnés de ladite première table de données multi-valuées.

**4.** Procédé selon l'une des revendications 1 à 3, comprenant les étapes consistant à :
- mettre à disposition de l'utilisateur une interface permettant de sélectionner au moins un champ supplémentaire parmi les champs de ladite pluralité de champs multi-valués qui n'ont pas été sélectionné précédemment
- modifier ladite deuxième table de données multi-valuées en ajoutant, pour chaque individu, les données de la cellule du champ supplémentaire à la cellule dudit champ vectorisé.

**5.** Procédé selon l'une des revendications 1 à 4, comprenant les étapes consistant à :
- mettre à disposition de l'utilisateur une interface permettant de sélectionner au moins un champ à supprimer dans les champs de ladite pluralité de champs multi-valués qui ont été sélectionné précédemment
- modifier ladite deuxième table de données multi-valuées en supprimant dudit champ vectorisé, pour chaque individu, les données provenant dudit champs à supprimer sélectionné.

**6.** Procédé selon l'une des revendications 1 à 5, comprenant les étapes consistant à :
- mettre à disposition de l'utilisateur une interface (11) permettant de sélectionner des paramètres d'affichage dudit champ vectorisé,
- générer un affichage de ladite deuxième table de données multi-valuées en fonction desdits paramètres d'affichage.

**7.** Procédé selon l'une des revendications 1 à 6, comprenant les étapes consistant à :
- mettre à disposition de l'utilisateur une interface permettant de sélectionner une cellule dudit champ vectorisé,
- générer un affichage de la cellule sélectionnée (9, 10) comprenant au moins l'affichage des données provenant d'un desdits champs sélectionnés.

**8.** Procédé selon l'une des revendications 1 à 7, comprenant les étapes consistant à :
- mettre à disposition de l'utilisateur une interface (12) permettant de sélectionner une opération à effectuer sur ledit champ vectorisé,
- générer une troisième table de données multi-valuées (13) comprenant une pluralité d'individus correspondant à ladite pluralité d'individus de la deuxième table de données multi-valuées, et au moins un champ de résultat dont les cellules comprennent, pour chaque individu, le résultat de l'opération sélectionnée sur les données multi-valuées contenues dans les cellules du champ vectorisé.

**9.** Logiciel de traitement de données comprenant une suite d'instructions qui, quand elles sont exécutées par un ordinateur hôte, provoque l'exécution d'un procédé selon l'une des revendications 1 à 8.
